# EUROPEAN PATENT APPLICATION

(11) **EP 3 862 942 A1**
(43) Date of publication of application: **11.08.2021**
(21) Application number: 20290008.0
(22) Date of filing: 05.02.2020
(51) Int. Cl.: G06Q 10/06, G06Q 50/30, G08G 5/00

(54) **ELECTRONIC DEVICE FOR GENERATING A POST-FLIGHT REPORT AND ASSOCIATED METHOD**

(71) Applicant: Thales, 92400 Courbevoie (FR)
(72) Inventor: Pawan, Kumar Maurya, 560025 Bangalore (IN); Gupta, Abhishek, 560025 Bangalore (IN)
(74) Representative: Lavoix

(57) **Abstract**

This electronic device comprises a graphical user interface that displays a profile (51) of the trajectory of the aircraft and that, for recording a new event in the post-flight report during the flight, allows a user to select first a point (64) of the profile of the trajectory of the aircraft and then a symbol (65) among symbols of a discrepancy type selection bar (60), before submitting (61) the point selected and the discrepancy type associated with the symbol selected as input data to create a new event in the post-flight report.

## Description

The present invention pertains to the technical field of aircraft maintenance, and mode particularly to the technical field of post-flight report production.

After an aircraft has completed a flight, the pilot of the aircraft is asked to produce a post-flight report, which mentions any sort of software or hardware anomalies or safety discrepancy that were identified by the pilot during the flight.

Usually, the post-flight report is a mere written form that the pilot has to complete.

However, during the flight itself, the pilot is busy flying the aircraft, so that post-flight reports are generally drafted after the completion of the flight, from the pilot's recollection of how the flight went. This requires the pilot to remember the occurrence of a particular event, the timeline of this event, the details of the flight plan at the time of the event, the state and the response of the systems of the aircraft at that time, and the action performed by the pilot at that time.

This is so burdensome for pilots, that many post-flight reports lack the level of details required by a maintenance team to assess and correct the corresponding discrepancy. This situation leads to multiple exchanges between the pilots, maintenance agents and suppliers.

Often, several occurrences of the same particular event have to be reported before the appropriate response is given. Thus the time necessary to address a given discrepancy remains important.

The invention therefore aims to overcome this problem.

To this end, the object of the invention is to provide an electronic device and a method according to the claims.

The invention and its advantages will be better understood upon reading the following description, provided solely for example, with reference made to the accompanying drawings in which:
- Figure 1 is a schematic representation of the electronic device according to the invention;
- Figure 2 is a horizontal representation displayed on the screen of the electronic device of figure 1;
- Figure 3 is a vertical representation alternatively displayed on the screen of the electronic device of figure 1;
- Figure 4 is a method of storing a new event in a post-flight report using the electronic device of figure 1 during the flight; and,
- Figure 5 is a method of reviewing a post-flight report before its submission using the electronic device of figure 1.

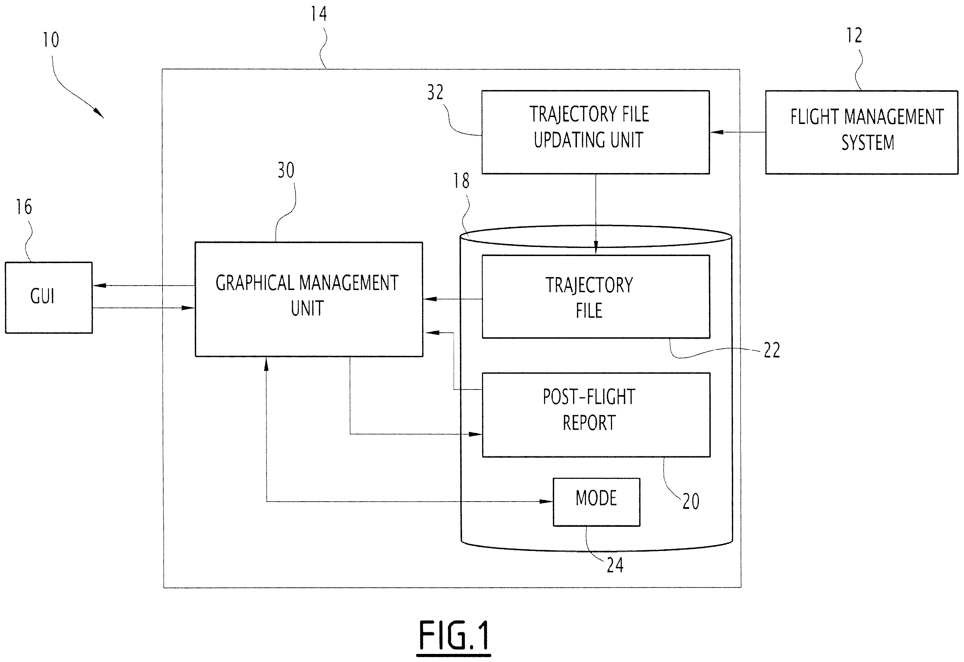

Figure 1 shows a preferred embodiment of an electronic device for generating a post-flight report according to the invention.

The electronic device 10 is intended to be on-board an aircraft, for example a helicopter, an airplane, or a drone remotely piloted by a pilot.

The electronic device 10 helps the pilot in the tasks associated with storing a new event during a flight and, advantageously, to review the post-flight report after the flight, before submitting it, for example to a maintenance team.

The electronic device 10 is installed in the cockpit of the aircraft and interconnected with other flight systems of the aircraft, at least with the flight management system - FMS 12 of the aircraft.

The electronic device 10 comprises a computing unit 14 and a graphical user interface - GUI 16.

The GUI 16 is for example a touch screen connected to the computing unit 14.

Alternatively, the graphical user interface includes several touch screens. In yet another alternative, the graphical user interface comprises at least one screen and various hardware devices, such as a mouse for selecting information displayed on the screen and/or an actual keyboard for entering characters.

The GUI 16 allows to generate a display according to suitable display data received from the computing unit 14.

The GUI 16 provides the possibility for the pilot of the aircraft to perform actions associated with graphical objects of the display. The GUI 16 then produces appropriate input data that are transmitted to the computing unit 14.

The computing unit 14 is a computer comprising processing means, such as a processor, and memorisation means, such as a memory space. In particular, the memorisation space stores computer programs, whose instructions are executed by the processing means.

The memory space also comprises a dedicated volume, such as a database 18, to store a post-flight report 20, a trajectory file 22, and a mode 24.

The post-flight report 20 is for example a table in the database 18. Each line (or entry) of this table corresponds to an event. Each column of this table corresponds to an attribute. The cell at the crossing of a line and a column allows to store a value of the corresponding attribute in order to describe the corresponding event.

In the present embodiment, an event stored in the post-flight report 20 corresponds to a discrepancy (also called a squawk) between the real trajectory of the aircraft relative to the planned trajectory of the aircraft, or planned path, which is calculated by the FMS 12 based on the flight plan. An event corresponds also to a discrepancy that is noticeable by the pilot, and that the pilot wishes to report for maintenance purposes.

The following table is an example of a possible set of attributes of the events stored in the post-flight report 20. The second columns gives the name of the attributes, while the third column gives, for each attribute, an explanation of the type of information it represents:

| **Attribute** | **Attribute** | **Description** |
|---|---|---|
| Identifier | Identifier | An integer number to identify the corresponding event; incremented for each new entry stored in the post-flight report. |
| Location | A/C Latitude/Longitude | Current position of the aircraft when the event occurred. |
| Navigation information | CAS | Current speed of the aircraft when the event occurred. |
| | Speed Target | FMS computed speed target |
| | Altitude Target | FMS computed altitude target |
| | Thrust Target | FMS computed thrust target |
| | AP/LNAV/VNAV status | Status of Autopilot, Lateral Navigation and Vertical navigation engagement |
| | Lateral Deviation XTK | Lateral Cross track error |
| | TKE | Lateral Track angle error |
| | ROLL CMD | Roll commands computed by the FMS |
| | VTK | Vertical Track angle error |
| | Pitch CMD | Pitch command computed by the FMS |
| | HDG | Current aircraft heading |
| | WIND | Current and predicted wind information |
| | FPLN record | Flight plan information |
| Discrepancy type | Discrepancy type | The discrepancy type selected by the pilot to describe the event |
| Further description | Message | String of characters entered by the pilot to further describe the event |
| | Form (type and properties) | Form drawn by the pilot to add graphical information to the description of the event. |

The trajectory file 22 regroups the navigation information that are necessary for generating a graphical representation of the trajectory of the aircraft, for each time (or location) of the flight.

The mode 24 correspond to the current operative mode of the electronic device 10. When the value of the mode is for example "H", the graphical representation of the trajectory is a horizontal profile, whereas when the value of the mode is for example "V", the graphical representation of the trajectory is a vertical profile.

The computing unit 14 comprises different units, each unit corresponding to a functionality realized by running a corresponding piece of computer program.

In the embodiment of figure 1, the computing unit 14 comprises for example a graphical management unit 30 and a trajectory file updating unit 32.

The trajectory file updating unit 32 is capable of updating the trajectory file 22 with navigation information provided by the FMS 12. For example, the unit 32 receives, at the beginning of the flight, the flight plan together with the planned path of the aircraft as calculated by the FMS 12 based on the flight plan. In addition, the unit 32 receives, periodically during the flight, from the FMS 12, instantaneous navigation information, such as the current position, altitude and speed of the aircraft, in order to determine the real trajectory of the aircraft. The trajectory file 22 thus contains an history of navigation information, from the start point of the flight, to allow the generation of a graphical representation for any time/location along the real trajectory.

The graphical management unit 30 is capable of producing display data and transmitting them to the GUI 16 for this latter to generate the corresponding display.

Advantageously, the unit 30 can be placed in one of two different modes according to the value of mode 24: a horizontal mode wherein it produces display data to generate a horizontal display comprising a horizontal profile of the trajectory of the aircraft; or a vertical mode wherein it produces display data to generate a vertical display comprising a vertical profile of the trajectory of the aircraft. The pilot have the possibility to select between the horizontal mode and the vertical mode, using a dedicated switch (not shown on the figures). This effects an update of the value of mode 24.

To generate display data, unit 30 regularly reads the information stored in the trajectory file 22 and the post-flight report 20.

The graphical management unit 30 is capable of receiving input data generated by the GUI 16 according to the actions performed by the pilot. The unit 30 is then able to execute specific tasks in accordance with the input data received.

In particular, when the pilot validate an event by touching a dedicated button of the GUI 16, the graphical management unit 30 is capable of storing a new event in the post-flight report 20.

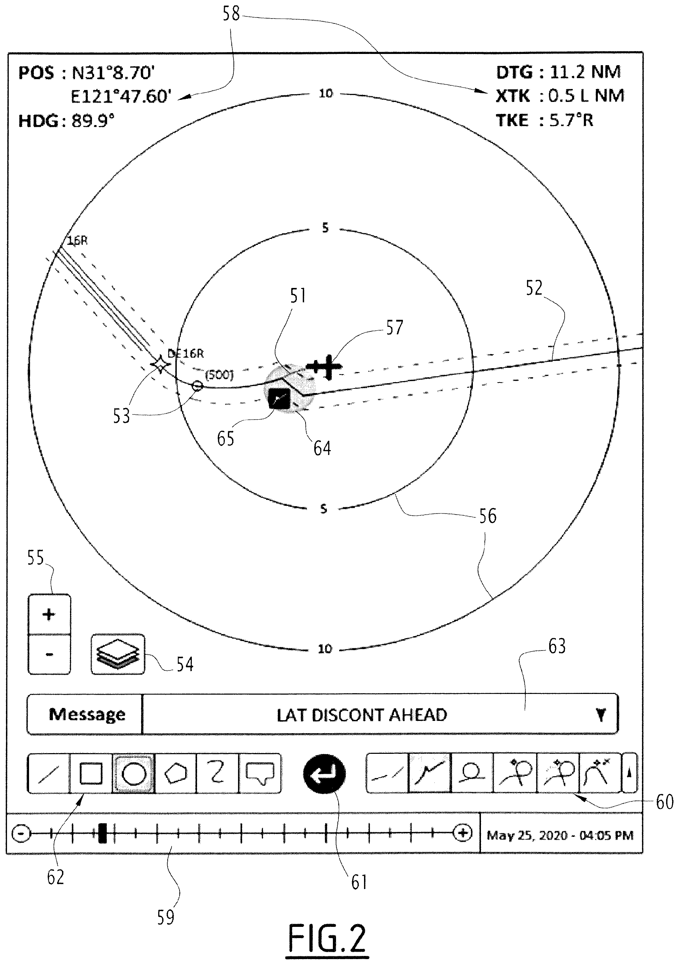

When the electronic device 10 is in horizontal mode, the GUI 16 displays the horizontal display of figure 2.

The horizontal display comprises a horizontal profile of the trajectory 51 of the aircraft. Advantageously, the horizontal profile also includes the planned path 52 of the aircraft and the flight plan information 53 (i.e. reference points of the flight plan).

The horizontal display comprises other graphical objects:
A layer button 54 allows the pilot to superimpose the flight plan and/or the planned path over the trajectory.

The horizontal profile has a scale, which is adjustable by the pilot using zoom button 55. The current scale is indicated by distance circles 56.

In figure 2, the horizontal profile is centred on the current position of the aircraft (indicated by an aircraft symbol 57), which is preferably updated in real time. However, with the slide 59, the pilot has the possibility to display another portion of the trajectory (i.e. a past portion of the trajectory) in order to select another point (or location) along the trajectory.

The navigation pieces of information of the aircraft at the point selected as the centre of the horizontal profile are shown in the upper part of the horizontal display. They are referred by general reference numeral 58.

The horizontal display comprises graphical objects dedicated to helping the pilot with the task of storing a new event in post-flight report 20, when he or she detects the occurrence of a discrepancy between the planned path and the trajectory.

These graphical objects comprise a discrepancy type selection bar 60, a validation button 61, a shape type selection bar 62 and a message box 63.

The discrepancy type selection bar 60 comprises a plurality of discrepancy type symbols, each symbols being associated with a discrepancy type. A discrepancy type is the type of an event as indicated by the pilot.

Each symbol of the bar 60 is selectable independently. Only one symbol can be selected at a time. The selected symbol is for example shaded.

The following table gives possible examples of discrepancy type symbols, the name of the corresponding symbol and the description of the corresponding discrepancy:

| Symbol | Symbol Name | Description |
|---|---|---|
| 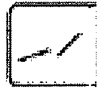 | Discontinuity | FMS computed a non-flyable path which results in a discontinuity |
| 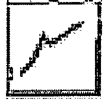 | Kink in Path | FMS computed a path which results in unflyable path and aircraft will overshoot the trajectory and undeserved wings wobble can be observed with LNAV manoeuvre and VNAV pitch-up and down and sudden jump in XTK/VTK. |

| | | |
|---|---|---|
| 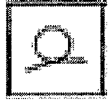 | Circle in Path | Undesired circle in path due to inappropriate leg type combination or NAVDB procedure coding errors or algorithm errors, generated by the lateral trajectory. |
| 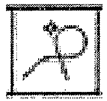 | Wrong Turn | Sometime a wrong turn is produced by the FMS i.e. instead of right turn trajectory produces a left turn or vice versa due to error in path computation. |
| 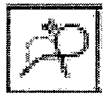 | Flip Turn | There are possibilities of flip turns which fluctuates when PERFFORAMNCE prediction is not stable or there is a change in predicated speed target too frequently which causes cyclic dependency on predicted speed targets and computed transition paths. |
| 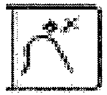 | Path Jump | Sometime computed path jumps from a/c position and there is a sudden XTK jump which results in un-desired roll/pitch manoeuvre, especially if it happens in proximity when aircraft is transitioning from one leg type to another leg type i.e. from a TF leg to DF leg where DF leg entry turn direction is not specified. |

The message box 63 is a fill-in box wherein the pilot is offered the possibility to input a string of characters to further describe the event to be registered in the post-flight report.

The shape type selection bar 62 comprises a plurality of shape type symbols, each symbols being associated with a shape. A shape (and its properties) is a graphical set of data that can be chosen by the pilot to further describe an event to be registered in the post-flight report.

Each symbol of the bar 62 is selectable independently. Only one symbol can be selected at a time. The selected symbol is for example shaded. By default, the shape type symbol corresponding to circles is selected.

When pressed, the validation button 61 triggers the storing of a new event in the post-flight report 20.

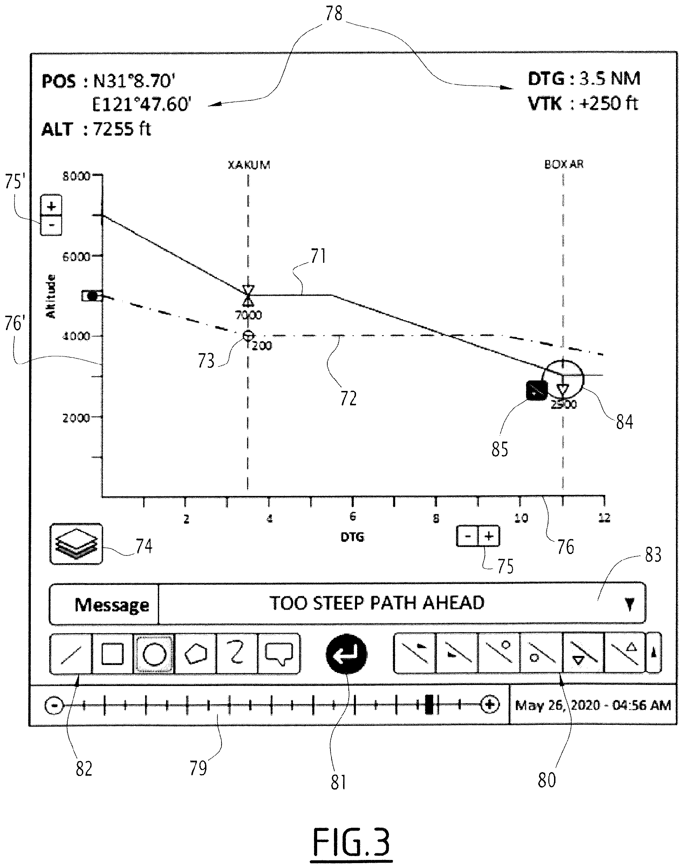

When the electronic device 10 is in vertical mode, the GUI 16 displays the vertical display of figure 3.

The vertical display comprises a vertical profile of the real trajectory 71 of the aircraft. Advantageously, the vertical profile also includes the planned path 72 of the aircraft and/or flight plan information 73.

The vertical display comprises other graphical objects:
A layer button 74 allows the pilot to superimpose the planned path over the trajectory.

The vertical profile has a first scale, which is adjustable by the pilot using zoom button 75 to adapt the distance axis 76; and a second scale, which is adjustable by the pilot using zoom button 75' to adapt the altitude axis 76'.

By default, the origin of the vertical profile corresponds to the current position of the aircraft. However, with the slide 79, the pilot has the possibility to select another point of the trajectory as the origin of the vertical profile. This is the case in figure 3.

The navigation pieces of information of the aircraft at the point selected as the origin of the vertical profile are shown in the upper part of the display. They are referred by general reference numeral 78.

The vertical display also comprises graphical objects dedicated to helping the pilot with the task of storing a new event in post-flight report 20, when he or she detects the occurrence of a discrepancy between the planned path and the trajectory.

These graphical objects comprises a discrepancy type selection bar 80, a validation button 81, a shape type selection bar 82 and a message box 83. These graphical objects are similar to those of the horizontal display.

The discrepancy type selection bar 80 comprises a plurality of discrepancy type symbols, each symbols being associated with a discrepancy type. It is to be noted that the possible discrepancies in the vertical representation may not be strictly identical with the possible discrepancies in the horizontal representation.

Each discrepancy type symbol of the bar 80 is selectable independently. Only one can be selected at a time.

The following table gives possible examples of discrepancy type symbols, the name of the corresponding symbol and the description of the corresponding discrepancy:

| Symbol | Symbol Name | Description |
|---|---|---|
| 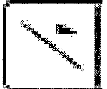 | Above Path | Aircraft is above path of the constructed vertical profile because of pitch up manoeuvre. |
| 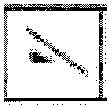 | Below Path | Aircraft is below path of the constructed vertical profile because of pitch down manoeuvre. |
| 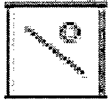 | Over Speed | Aircraft is unable to slow down to adhere the speed constraint on waypoint or vertical speed limit or speed restriction because of incorrect speed deceleration zone computation etc. |

| | | |
|---|---|---|
| 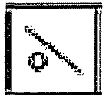 | Under Speed | Aircraft speed is targeting to look ahead speed constraint erroneously resulting in under speed. |
| 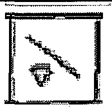 | VTK error split Downward | This is the case where vertical descent profile is targeting to an inappropriate vertical segment portion |
| 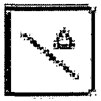 | VTK error split Upward | This is the case when Vertical Descent Profile reference segment is set incorrectly to a segment which is down path to current profile. |

The message box 83 is a fill-in box wherein the pilot is offered the possibility to input a string of characters to further describe the event to be registered in the post-flight report.

The shape type selection bar 82 comprises a plurality of shape type symbols, each symbols being associated with a shape. A form (and its properties) is a graphical set of data that can be chosen by the pilot to further describe an event to be registered in the post-flight report. By default, the shape type symbol corresponding to circles is selected.

When pressed, the validation button 81 triggers the storing of a new event in the post-flight report 20.

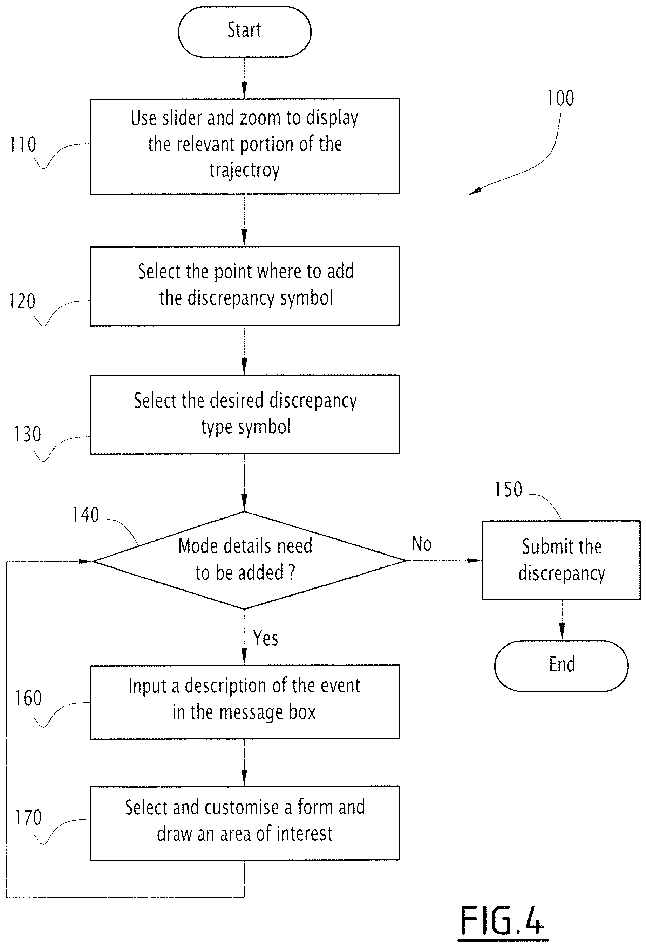

Figure 4 shows an embodiment of a method for generating automatically a post-flight report according to the invention. The method 100 allows the pilot to store a new event during the flight using the electronic device 10. For the following description, the electronic device is for example switched in the horizontal mode.

After the occurrence of a discrepancy, whereas immediately after or when the pilot is free to update the post-flight report, the pilot uses the electronic device 10 to store a new-event corresponding to this discrepancy in the post-flight report 20.

First, in step 110, the pilot uses the slider 59 in order the horizontal profile shows the portion of the trajectory where the discrepancy occurred. The pilot also uses the zoom button 55 to adapt the scale of the horizontal profile to the portion of the trajectory impacted by the discrepancy.

Then, in step 120, the pilot selects a point of the trajectory around which the discrepancy occurred. In fact, the pilot touches an area of the GUI 16 and the nearest point of the trajectory 51 is automatically selected.

As a consequence of this action, and since the default shape type is a circle, the horizontal display is refreshed by the graphical management unit 30 so that a circle 64 is drawn around the point selected.

Then, in step 130, the pilot selects, among the symbols of the discrepancy type selection bar 60, the symbol associated with the discrepancy type of the discrepancy that occurred.

As a consequence of this action, the horizontal display is refreshed by the graphical management unit 30 so that an icon 65 of the discrepancy type symbol selected is added in the vicinity of the point selected.

When, in step 140, the pilot considers that he or she has no additional information to add to describe the event, the method moves to step 150.

On the contrary, when the pilot wishes to add further information to describe the event prior to submitting it, in step 160, he or she may use the message box 63 to type a string of characters. For example, the pilots first touches the area of the box 63, so that a virtual keyboard is displayed. The pilots then types the content of the description message to associate with the event in the post-flight report 20.

Alternatively or in addition, in step 170, the pilot can select a shape type symbol among the shape type symbols presented in the selection bar 62. By a long touch of a symbols, the pilot is offered a menu to choose the properties of the selected shape type, for example its colour.

As a consequence of this action, the horizontal display is refreshed by the graphical management unit 30 so that the circle initially drawn around the point selected is replaced by a shape corresponding to the shape type now selected.

In step 150, the pilot submits the event by touching symbol 61.

As a consequence of this action, the GUI 16 gathers into an input data the point selected, the discrepancy type selected and the additional information of description (message and shape) and send this input data to the graphical management unit 30.

On receipt of this input data, the graphical management unit 30 updates the post-flight report 20 with a new entry. The unit 30 stores each piece of information received in the input data in the suitable attributes of the new event. The unit 30 requests the trajectory file 22 based on the point selected to retrieve the navigation information corresponding to the point selected. The unit 30 stores the navigation information in the in the suitable attributes of new entry.

For example, when referring back to figure 2, the pilot observes a discrepancy which is a kink in the lateral trajectory of the aircraft after waypoints "DE16R" and "(500)". The pilot first touch the horizontal profile to select the point where the discrepancy occurred and then selects, in the selection bar 60, the discrepancy type symbol associated with a kink (second symbols from the left in the selection bar 60). Consequence, a circle 64 is placed around the point selected and the icon 65 of a kink is placed in the vicinity of the point selected. In figure 2, the pilot inputs the string "LAT DISCONT AHEAD" in the message box 63.

By pressing the validation button 61, a new event will be created in the post-flight report 20 with a location equal to the point selected, a discrepancy type equal to "Kink in Path", and a description message equal to "LAT DISCONT AHEAD". Further navigation pieces of information are retrieved from the trajectory file 22 to further complete the description of this new event.

Advantageously, an acknowledgement popup is displayed with the identifier attributed to the new event to inform the pilot of the success of the action of registration.

Advantageously, the graphical management unit 30 also uses the content of the post-flight report 20 to generate, in combination with the navigation information of the trajectory file 22, the display data. Thus the corresponding display shows the events of the post-flight report along the trajectory of the aircraft. At any time, an event can be edited by long pressing the shape with which it is highlighted.

Similarly, when referring back to figure 3, the pilot observes a discrepancy when the vertical descent profile is inappropriate when targetting waypoint "BOX AR". The pilot first touch the vertical profile to select the point where the discrepancy occurred and then selects, in the selection bar 80, the discrepancy type symbol associated with a "VTK error split" (fifth symbols from the left in the selection bar 80). Consequently, a circle 84 is placed around the point selected and the icon 85 of a "VTK error split Downwards" is placed in the vicinity of the point selected. In figure 3, the pilot inputs the string "TOO STEEP PATH AHEAD" in the message box 83. By pressing the validation button 81, a new event is created in the post-flight report 20.

After the flight has been completed, but before submitting the post-flight report 20 to the ground maintenance team, the electronic device 10 allows the pilot to go through the post-flight report 20 to review its content and, if necessary, edit it by adding new events, modifying existing events, etc.

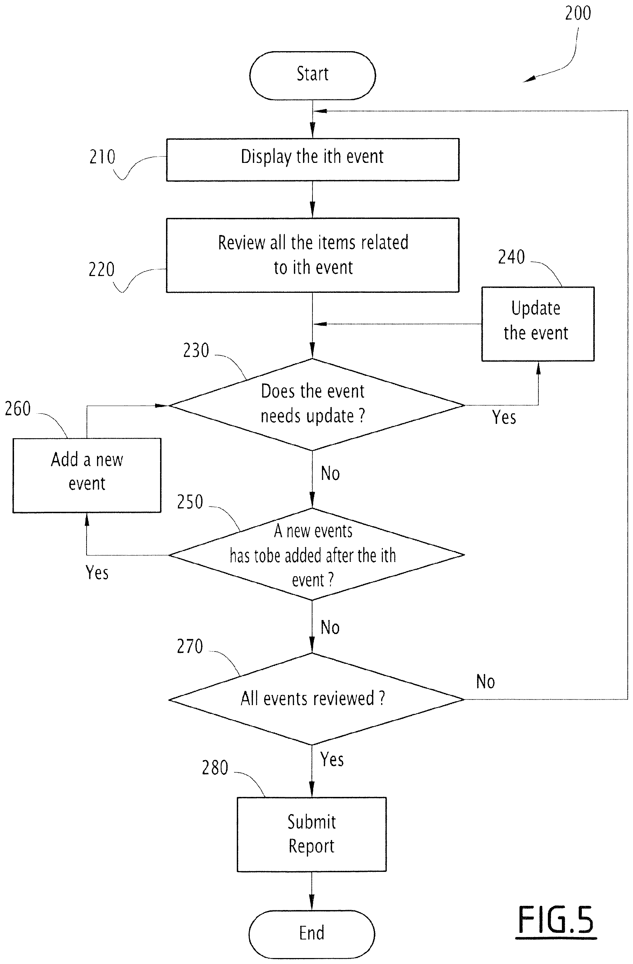

The corresponding reviewing method 200 is shown in figure 5.

In step 210, the pilot is successively presented with each event contained in the raw post-fight report.

According to the operative mode of the electronic device 10, the profile is displayed so that the event under consideration (the ith event) can be seen by the pilot.

In step 220, by long pressing the validation button 61 (81) or the shape associated with the event, the pilot is presented with the set of attributes of the event under consideration as currently recorded in the raw report 20.

In step 230, when the pilot wants to update the set of attributes, the method moves to step 240, wherein the pilot has the possibility to modify the set of attributes. For example, the pilot may translate the point where the event occurred along the trajectory, change the type of discrepancy type associated with the event, edit the description message associated with the event, correct the properties or the type of the shape associated with the event... Once the modification are inputted, the pilot presses the validation button 61 (81) in order to update the corresponding entry of the post-flight report.

In step 250, when the pilot wants to add a new event into the post-flight report 20, just after the ith event presented, the method moves to step 260, wherein the pilot is offered the possibility to store a new event in the same manner as it is done during flight.

While the pilot has not gone through the whole of the post-flight report (step 270), the steps 210 to 260 are iterated.

Once the pilot has gone through the whole of the post-flight report, he or she submits it in step 280. The submission may consists to connect the electronic device to a maintenance computer, in order this latter to upload report 20 for further processing. Alternatively, the submission may consists in physically giving the electronic device 10 to a maintenance engineer, who will use the electronic device 10 to assess the events that occurred during the flight.

The present electronic device for generating a post-flight report constitutes an intuitive tool for the pilot to report accurately and immediately issues encountered during the flight.

The post-flight report provides the maintenance engineers with the exact same view the pilot had when the discrepancy occurred, thus avoiding any communication gap with the pilot and getting a clear understanding of the discrepancies.

This participates to a quicker analysis of the discrepancies encountered and to reduce the turnaround time for resolving issues.

In particular, it helps to improve the software used by the FMS.

The electronic device has been presented as a dedicated system. Alternatively, it is a mere computer program executed by a system already present on board the aircraft.

## Claims

1. An electronic device (10) for generating a post-flight report (20), the post-flight report being transmitted to the ground after an aircraft has completed a flight, said post-flight report comprising events, each event corresponding to a discrepancy that occurred during the flight, an event being defined by a plurality of attributes comprising at least a discrepancy type attribute and a location attribute,
the electronic device comprising a computing unit (14) and a graphical user interface (16), which is connected to the computing unit, the post-flight report being memorised on a memory of the computing unit,
the electronic device being intended to be on-board the aircraft during the flight and connected to a Flight Management System (12) of the aircraft in order to obtain navigation information from said Flight Management System,
the computing unit generating display data from the navigation information received from said Flight Management System in order the graphical user interface to display a profile of the trajectory (51, 71) of the aircraft and graphical objects comprising at least a discrepancy type selection bar (60, 80), the discrepancy type selection bar comprising a plurality of symbols, each symbols being associated with a type of possible discrepancies affecting the trajectory of the aircraft;
and, the graphical user interface allowing, for recording a new event in the post-flight report during the flight, a user to select a point of the profile of the trajectory of the aircraft and a symbol among the symbols of the discrepancy type selection bar, before submitting the point selected and discrepancy type associated with the symbol selected as input data to the computing unit,
when receiving the input data, the computing unit is able to create a new event in the post-flight report and store the discrepancy type as the value of the discrepancy type attribute of the new event and the point as the value of the location attribute of the new event.

2. The electronic device according to claim 1, wherein the computing unit (14) receives from the Flight Management System (12) a flight plan and/or a planned path calculated based on the flight plan, and generates display data in order to display, in addition to the profile of the trajectory of the aircraft, the flight plan and/or the planned path.

3. The electronic device according to claim 1 or claim 2, wherein the graphical user interface (16) allows the user to add description information, the description information being incorporated into the input data when a new event is submitted, and when receiving the input data, the computing unit is able to store the description information as the value of a description attribute of the new event in the post-flight report.

4. The electronic device according to claim 3, wherein the graphical user interface presents a message box for the user to input a string of characters as description information and/ or a shape type selection bar for the user to select a shape type as description information.

5. The electronic device according to any one of claims 1 to 4, wherein the graphical user interface generates display data from the navigation information and the post-flight report, in order the graphical user interface to display a profile of the trajectory (51, 71) on which are represented the events currently stored in the post-flight report.

6. Method for generating a post-flight report (20), using the electronic device (10) according to any one of claims 1 to 5, the method comprising the steps of:
- displaying, on the graphical user interface (16), a profile of a trajectory of the aircraft, based on navigation information provided by the Flight Management System (12);
- displaying, on the graphical user interface (16), graphical objects comprising a least a discrepancy type selection bar (60, 80), the discrepancy type selection bar comprising a plurality of symbols, each symbols being associated with a type of possible discrepancies affecting the trajectory of the aircraft;
and when a user wishes to store a discrepancy as a new event in the post-flight report, the method further comprises the steps of:
- selecting, by the user by means of the graphical user interface (16), a point of the trajectory, to indicate the location along the trajectory of the aircraft where the discrepancy was observed;
- selecting, by the user by means of the graphical user interface (16), a symbol among the symbols of the discrepancy type selection bar, to indicate that the discrepancy is of the discrepancy type associated with the symbol selected;
- validating the point selected and discrepancy type associated with the symbol selected as input data to the computing unit; and,
- creating a new event in the post-flight report and storing the discrepancy type as the value of the discrepancy type attribute of the new event and the point as the value of the location attribute of the new event in the post-flight report.

7. The method according to claim 6, wherein the step of displaying a profile of a trajectory of the aircraft, further comprises the display of the flight plan and/or the planned path of the aircraft in addition to the profile of the trajectory of the aircraft.

8. The method according to claim 6 or claim 7, wherein, when a user wishes to store a discrepancy as a new event in the post-flight report, the method further comprises the step of adding description information, the description information being incorporated into the input data in the step of submitting, and the step of creating a new event comprises storing the description information as the value of a description attribute of the new event in the post-flight report.

9. The method according to any one of claims 6 to 8, wherein the step of displaying a profile of a trajectory of the aircraft, further comprises displaying, on the profile of the trajectory (51, 71), the events currently stored in the post-flight report.

10. The method according to any one of claims 6 to 9, wherein, before submitting the post-flight report to a maintenance team after the flight is competed, the method further comprises a step of reviewing the post-flight report.

11. The method according to any one of claims 6 to 10, wherein, before displaying a profile of a trajectory of the aircraft, the method comprises reading the value of an operative mode indicative weather the profile of the trajectory of the aircraft to be displayed is a horizontal profile or a vertical profile.

12. The method according to claim 11, wherein the plurality of symbols of the discrepancy type selection bar (60, 80) to be displayed, depends of the value of the operative mode (24).
